# EUROPÄISCHE PATENTSCHRIFT

(11) **EP 2 788 567 B1**
(45) Veröffentlichungstag und Bekanntmachung des Hinweises auf die Patenterteilung: **11.05.2016**
(21) Anmeldenummer: 12837631.6
(22) Anmeldetag: 06.12.2012
(51) Int. Cl.: E05B 85/02, E05B 77/34

(54) **KRAFTFAHRZEUGTÜRSCHLOSS**
MOTOR VEHICLE DOOR LOCK
SERRURE DE PORTIÈRE DE VÉHICULE AUTOMOBILE

(30) Priorität: 09.12.2011 DE 102011120882
(43) Veröffentlichungstag der Anmeldung: 15.10.2014
(73) Patentinhaber: Kiekert Aktiengesellschaft, 42579 Heiligenhaus (DE)
(72) Erfinder: GRAUTE, Ludger, 45130 Essen (DE)
(74) Vertreter: Nunnenkamp, Jörg
(86) Internationale Anmeldenummer: PCT/DE2012/001180
(87) Internationale Veröffentlichungsnummer: WO 2013/083116

(56) Entgegenhaltungen:
- EP-A2- 1 703 047
- DE-A1- 10 334 223
- FR-A1- 2 923 249
- GB-A- 2 263 724
- GB-A- 2 475 962
- JP-A- 2003 314 116
- JP-U- H0 571 377
- US-A1- 2010 072 761

## Beschreibung

Die Erfindung betrifft ein Kraftfahrzeugtürschloss, mit wenigstens einem in einem Schlossgehäuse angeordnetem Betätigungshebel, ferner mit einem Verbindungsmittel zur Kopplung des Betätigungshebels mit einem außerhalb des Schlossgehäuses angeordneten Betätigungselement, und mit einem Anschlusselement zur Lagerung des Verbindungsmittels am Schlossgehäuse, wobei das Anschlusselement als mit einem Grundgehäuse zum Schlussgehäuse vereinigbares Teilgehäuse ausgebildet ist, welches in montiertem Zustand sowohl eine Öffnung des Grundgehäuses als auch einen Anbindungsbereich des Betätigungshebels an das Verbindungsmittel wenigstens größtenteils abdeckt, wobei das Anschlusselement lösbar mit dem Grundgehäuse verbunden ist.

Ein Kraftfahrzeugtürschloss wird im Allgemeinen über einen Außentürgriff bzw. Innentürgriff als Betätigungselement geöffnet. Zu diesem Zweck ist das außerhalb des Schlossgehäuses platzierte Betätigungselement über einen Bowdenzug, eine Verbindungsstange etc. mit dem im Innern des Schlossgehäuses befindlichen Betätigungshebel gekoppelt. Bei dem Betätigungshebel kann es sich um einen Innenbetätigungshebel, einen Außenbetätigungshebel, einen Betätigungshaupthebel, einen Auslösehebel etc. handeln.

Im Rahmen des Standes Technik nach der DE 203 16 352 U1 ist das Schlossgehäuse mit einem Führungselement ausgerüstet. Mit Hilfe des Führungselementes wird das Verbindungsmittel in das Schlossgehäuse hinein und in Richtung des Betätigungshebels geführt. Das fragliche Führungselement lässt sich an dem Schlossgehäuse wahlweise in einer ersten Position oder in einer zweiten Position anbringen. Auf diese Weise will man das Eindringen von Feuchtigkeit, Schmutz oder dergleichen in das Schlossgehäuse verhindern und eine Kapselung des Verbindungsmittels nach außen hin erreichen. Das wird allerdings mit einem relativ großen Montageaufwand erkauft bzw. führt dazu, dass die Vereinigung von einerseits Betätigungshebel und andererseits Verbindungsmittel relativ kompliziert ist.

Im Rahmen des Standes der Technik nach der DE 103 34 223 A1 ist das Schlossgehäuse mit wenigstens einem Adapterelement zur optionalen und wahlweisen Führung und Halterung unterschiedlicher Verbindungselemente bzw. Verbindungsmittel am Schlossgehäuse ausgerüstet. Auf diese Weise kann das Türschloss wahlweise beispielsweise von einer Bowdenzugbetätigung auf eine Stangenbetätigung (und umgekehrt) umgerüstet werden. Dazu ist das Adapterelement als Ein-/Anbauteil für das Schlossgehäuse ausgeführt. Als Folge hiervon liegt ein Anbindungsbereich des Betätigungshebels an das Verbindungsmittel außerhalb des Schlossgehäuses, ist folglich Umwelteinflüssen mehr oder minder ungeschützt ausgesetzt.

Bei der gattungsbildenden Lehre nach der GB 2 263 724 A ist ein Anschlusselement realisiert, welches in eine rechteckige Öffnung eingesteckt wird. Außerdem ist eine weitere hilfsweise Abdeckplatte für das Schlossgehäuse vorgesehen, welche lösbar mit Hilfe des Anschlusselementes gehalten wird und mit einem Betätigungselement ausgerüstet ist. Auf diese Weise lässt sich wahlweise eine Verbindungsstange oder ein Bowdenzugkabel mit dem Schlossmechanismus verbinden. Allerdings ist die Umrüstung relativ kompliziert.

Der weitere Stand der Technik nach der US 2010/0072761 A1 zeigt ein Kraftfahrzeugtürschloss, bei dem ein Anbindungsbereich für einen Bowdenzug mit Hilfe einer schwenkbaren Klappe verschlossen und geöffnet werden kann. Die Klappe ist über ein Filmscharnier an das Schlossgehäuse angeschlossen. Der Anbindungsbereich findet sich im Innern des Schlossgehäuses. Dadurch lassen sich Umrüstungen praktisch nicht oder kaum mit vertretbarem Aufwand realisieren.

Der Erfindung liegt das technische Problem zugrunde, ein Kraftfahrzeugtürschloss des eingangs beschriebenen Aufbaus so weiter zu entwickeln, dass bei unveränderter Möglichkeit zur Umrüstung des Verbindungsmittels zugleich ein maximaler Schutz gegenüber Umwelteinflüssen zur Verfügung gestellt wird.

Zur Lösung dieser technischen Problemstellung ist ein gattungsgemäßes Kraftfahrzeugtürschloss im Rahmen der Erfindung dadurch gekennzeichnet, dass das Anschlusselement lösbar mit dem Grundgehäuse verbunden und hierzu wenigstens ein in eine Steckbuchse eingreifender Steckzapfen vorgesehen ist, wobei die Steckbuchse und der hierin eingreifende Steckzapfen zusammengenommen eine Drehachse für das an das Grundgehäuse einschwenkbare Anschlusselement definieren.

Im Rahmen der Erfindung kommt also zunächst einmal ein spezielles Anschlusselement zum Einsatz, welches zum einen für die Lagerung des Verbindungsmittels am Schlossgehäuse sorgt. Ferner fungiert dieses Anschlusselement erfindungsgemäß zum anderen als Teilgehäuse, das heißt Bestandteil des Schlossgehäuses. Tatsächlich lässt sich das fragliche Teilgehäuse mit dem Grundgehäuse insgesamt zu dem Schlossgehäuse vereinigen. Zu diesem Zweck sind das Anschlusselement bzw. Teilgehäuse einerseits und das Grundgehäuse andererseits typischerweise materialeinheitlich ausgelegt, beispielsweise jeweils als Kunststoffspritzgussteil ausgeführt. Dabei wird man im Allgemeinen auf gleiche Kunststoffe zurückgreifen, wie z. B. PE (Polyethylen), PP (Polypropylen), PA (Polyamid) usw.

Jedenfalls begünstigt die materialeinheitliche Auslegung von einerseits dem Anschlusselement bzw. Teilgehäuse und andererseits dem Grundgehäuse deren Vereinigung. Es ist hierzu eine lösbare Steckverbindung vorgesehen, wobei erfindungsgemäss wenigstens ein in eine Steckbuchse eingreifender Steckzapfen vorgesehen ist und wobei die Steckbuchse und der hierin eingreifende Steckzapfen zusammengenommen eine Drehachse für das an das Grundgehäuse anschwenkbare Anschlusselement definieren. Tatsächlich ist für die lösbare Kopplung des Anschlusselementes bzw. Teilgehäuses an das Grundgehäuse der wenigstens eine in die Steckbuchse eingreifende Steckzapfen realisiert. Meistens finden sich zwei Steckbuchsen und zwei zugehörige Steckzapfen.
Dabei kann die Steckbuchse am Anschlusselement ausgebildet sein, wohingegen das Grundgehäuse mit dem Steckzapfen ausgerüstet ist. Selbstverständlich ist auch eine umgekehrte Vorgehensweise denkbar. Darüber hinaus liegt es zweifellos im Rahmen der Erfindung, bei Rückgriff auf zwei Steckbuchsen und zwei Steckzapfen einen Steckzapfen am Grundgehäuse und einen Steckzapfen am Anschlusselement bzw. Teilgehäuse vorzusehen. Ebenso sind gemischte Formen möglich, das heißt, dass sowohl das Grundgehäuse als auch das Anschlusselement bzw. Teilgehäuse einen Steckzapfen und eine Steckbuchse aufweisen.
Das Anschlusselement verfügt also über eine doppelte Funktionalität. Einerseits zur Lagerung des Verbindungsmittels am Schlossgehäuse und andererseits als Teilgehäuse, das heißt Bestandteil des Schlossgehäuses als solchen. Die letztgenannte Funktion korrespondiert zusätzlich dazu, dass sowohl eine Öffnung des Grundgehäuses als auch der Anbindungsbereich des Betätigungshebels an das Verbindungsmittel wenigstens größtenteils abgedeckt werden. Die Öffnung im Grundgehäuse stellt sicher, dass durch diese Öffnung hindurch der Betätigungshebel nach außerhalb des Grundgehäuses reicht oder reichen kann. Dadurch ist der Anbindungsbereich für die Montage des Verbindungsmittels am Betätigungshebel frei zugänglich. Das Anschlusselement bzw. Teilgehäuse sorgt nun dafür, dass sowohl die Öffnung des Grundgehäuses als auch der fragliche Anbindungsbereich des Betätigungshebels an das Verbindungsmittel wenigstens größtenteils abgedeckt werden, und zwar in montiertem Zustand des Anschlusselementes bzw. Teilgehäuses an dem Grundgehäuse.
Eine vollständige Abdeckung wird in diesem Zusammenhang weder verfolgt noch ist sie nötig, weil dadurch insgesamt eine Öffnung im Schlossgehäuse respektive dem Teilgehäuse verbleibt, durch welche der fragliche Anbindungsbereich unverändert zugänglich bleibt. Gleichwohl sorgt das Anschlusselement bzw. Teilgehäuse dafür, dass der Anbindungsgebereich eine zumindest oberflächenseitige Abdeckung erfährt, allerdings nach wie vor von der Seite her zugänglich ist.
Bei der Vereinigung von einerseits dem Anschlusselement bzw. Teilgehäuse und andererseits dem Grundgehäuse zu dem Schlossgehäuse wird erfindungsgemäß so vorgegangen, dass das Anschlusselement bzw. Teilgehäuse an das Grundgehäuse angeschwenkt wird. Zu diesem Zweck definieren der eine in die Steckbuchse eingreifende Steckzapfen und die Steckbuchse als solche eine Drehachse für das an das Grundgehäuse anschwenkbare Anschlusselement bzw. Teilgehäuse. Sobald das Anschlusselement respektive Teilgehäuse seine montierte Stellung erreicht, kommt eine weitere Steckbuchse mit zugehörigem Steckzapfen zur Deckung, so dass bei montiertem Steckzapfen das Anschlusselement bzw. Teilgehäuse fest mit dem Grundgehäuse gekoppelt ist. Selbstverständlich lässt sich der eine bzw. lassen sich die beiden Steckzapfen mühelos entfernen, so dass das Anschlusselement respektive Teilgehäuse bei Bedarf vom Grundgehäuse abgenommen werden kann. Dadurch lässt sich das erfindungsgemäße Kraftfahrzeugtürschloss einfach hinsichtlich des eingesetzten Verbindungsmittels umrüsten.

Beispielsweise ist es denkbar, als Verbindungsmittel einen Bowdenzug einzusetzen. Zu diesem Bowdenzug gehört ein spezielles Bowdenzug-Anschlusselement. Zum Wechsel auf eine Stange als Verbindungsmittel ist es lediglich erforderlich, das Bowdenzug-Anschlusselement zu entfernen und beispielsweise gegen ein Stangen-Anschlusselement auszutauschen. Grundsätzlich kann aber auch mit ein und demselben Anschlusselement gearbeitet werden. Auch in diesem Fall muss das Anschlusselement bzw. Teilgehäuse zunächst vom Grundgehäuse entfernt werden, damit der Anbindungsbereich zugänglich wird.

Diese sämtlichen Maßnahmen lassen sich durchweg ohne Werkzeuge durchführen, sind folglich besonders montagefreundlich. Lediglich das optionale Einsetzen und Entfernen der Steckzapfen mag spezielle Montagemittel erfordern. Sofern an dieser Stelle Rastverbindungen zwischen dem Anschlusselement und dem Grundgehäuse zum Einsatz kommen, sind selbst solche Montagemittel entbehrlich.

Hinzu kommt, dass das als Teilgehäuse ausgeführte Anschlusselement einen deutlich verbesserten Wasserschutz bzw. allgemein Schutz vor Umwelteinflüssen insbesondere des Anbindungsgebereiches zur Verfügung stellt. Das gilt besonders, wenn man das erfindungsgemäße Kraftfahrzeugtürschloss mit dem gattungsbildenden Kraftfahrzeugtürschloss nach der DE 103 34 223 A1 vergleicht, welches an dieser Stelle praktisch überhaupt keine Schutzmaßnahmen vorsieht. In jedem Fall sorgt das Anschlusselement bzw. Teilgehäuse dafür, dass der Anbindungsgebereich des Betätigungshebels an das Verbindungsmittel praktisch vollständig oder nahezu vollständig abgedeckt wird. Insbesondere umschließt das Anschlusselement zumindest bereichsweise ein Ende des Verbindungsmittels, welches im Anbindungsbereich mit dem Betätigungshebel gekoppelt wird. Hierbei mag es sich um das aus einer Hülle eines Bowdenzuges herausragende Ende des im Innern befindlichen Drahtseils oder auch ein Stangenende handeln.

Das Anschlusselement ist im Allgemeinen mit einer Lageraufnahme für einen Befestigungsring des Verbindungsmittels ausgerüstet. Auf diese Weise dient das Anschlusselement zur Lagerung des Verbindungsmittels am Schlossgehäuse. Tatsächlich ist die fragliche Lageraufnahme typischerweise als Schlitzaufnahme ausgebildet. Der Befestigungsring mag mit zwei eine Befestigungsnut zwischen sich einschließenden Befestigungsflanschen ausgerüstet sein.

Sobald der Befestigungsring des Verbindungsmittels in die Schlitzaufnahme am Anschlusselement bzw. Teilgehäuse eingesteckt wird, greifen zwei die Schlitzaufnahme begrenzende Stege in die Befestigungsnut des Befestigungsringes ein. Die die Befestigungsnut zwischen sich einschließenden Befestigungsflansche nehmen die beiden Stege zwischen sich auf, so dass der Befestigungsring sicher und zugleich lösbar in der Lageraufnahme gehalten wird. Das gilt dann natürlich auch für das Verbindungsmittel im Ganzen. Das heißt, durch die lösbare Lagerung des Verbindungsmittels in der Lageraufnahme am Anschlusselement bzw. Teilgehäuse ist ein jeweiliger Austausch des gewünschten Verbindungsmittels problemlos und einfach sowie praktisch ohne Werkzeug möglich. Das heißt, die Umrüstung von einerseits einer Stangenbetätigung auf eine Bowdenzugbetätigung und umgekehrt lässt sich einfach und wahlweise werkzeuglos oder überwiegend werkzeuglos bewerkstelligen.

Das Anschlusselement ist im Querschnitt meistens L-förmig ausgebildet. Dabei fungiert der eine L-Schenkel regelmäßig als Fortsetzungsoberfläche einer Grundgehäuseoberfläche. Das heißt, der eine L-Schenkel bildet eine Oberfläche bzw. Fortsetzungsoberfläche der Grundgehäuseoberfläche, wobei die Fortsetzungsoberfläche und die Grundgehäuseoberfläche insgesamt eine Oberfläche des Schlossgehäuses beschreiben. Dagegen fungiert der andere L-Schenkel des Anschlusselementes bzw. Teilgehäuses als Seitenfläche. Während der eine L-Schenkel bzw. die an dieser Stelle realisierte Fortsetzungsoberfläche geschlossen ausgebildet ist, weist der andere L-Schenkel bzw. die dadurch definierte Seitenfläche typischerweise eine Öffnung auf, durch welche der Anbindungsbereich des Betätigungshebels an das Verbindungsmittel von der Seite her zugänglich bleibt.

Zur exakten Positionierung des Anschlusselementes bzw. Teilgehäuses am Grundgehäuse ist die Fortsetzungsoberfläche des Anschlusselementes regelmäßig mit einem oder mehreren Formschlusselementen ausgerüstet. Die fraglichen Formschlusselemente korrespondieren typischerweise zu Gegenformschlusselementen an der Grundgehäuseoberfläche. Sobald also das Anschlusselement bzw. Teilgehäuse mit dem Grundgehäuse verbunden wird, greifen die Formschlusselemente an der Fortsetzungsoberfläche und die Gegenformschlusselemente an der Grundgehäuseoberfläche wenigstens teilweise ineinander. Dadurch wird das Anschlusselement bzw. Teilgehäuse gegenüber dem Grundgehäuse ausgerichtet und zentriert.

Das geschieht typischerweise im Zuge des zuvor bereits beschriebenen Schwenkvorganges, bei welchem das Anschlusselement bzw. Teilgehäuse für die Montage am Grundgehäuse an dieses unter Berücksichtigung der Drehachse angeschwenkt wird. Sobald das Anschlusselement bzw. Teilgehäuse seine montierte Position erreicht hat, kommen die Formschlusselemente bzw. Gegenformschlusselemente zumindest teilweise in Eingriff, so dass das Anschlusselement bzw. Teilgehäuse gegenüber dem Grundgehäuse ausgerichtet und zentriert ist. Um diese Position dann noch zu fixieren, wird meistens der zweite Steckzapfen in die zweite Steckbuchse eingesteckt, was aufgrund des erreichten Formschlusses eher eine Sicherungsmaßnahme als eine Notwendigkeit darstellt. Hierin sind die wesentlichen Vorteile zu sehen.

Im Folgenden wird die Erfindung anhand einer lediglich ein Ausführungsbeispiel darstellenden Zeichnung näher erläutert; es zeigen:
- **Fig. 1**: das erfindungsgemäße Kraftfahrzeugtürschloss in einer perspektivischen Teilansicht,
- Fig. 2: den Gegenstand nach Fig. 1 mit abgenommenen Anschlusselement und
- Fig. 3: das Anschlusselement in einer Rückansicht.

In den Figuren ist ein Kraftfahrzeugtürschloss dargestellt, welches zunächst einmal über ein Schlossgehäuse 1, 2 verfügt. In dem Schlossgehäuse 1, 2 ist ein Betätigungshebel 3 angeordnet, der als Innenbetätigungshebel oder auch Außenbetätigungshebel bzw. Betätigungshaupthebel ausgebildet ist oder sein mag und insgesamt auf ein nicht näher dargestelltes Gesperre arbeitet. Insofern mag ein vergleichbarer Detailaufbau realisiert sein, wie er im Rahmen der gattungsbildenden DE 103 34 223 A1 beschrieben wird. Ergänzend sei auf die ebenfalls in der Beschreibungseinleitung in Bezug genommene DE 203 16 352 U1 verwiesen.

Neben dem Betätigungshebel 3 erkennt man ein Verbindungsmittel 4, 5, welches zur Kopplung des Betätigungshebels 3 mit einem außerhalb des Schlossgehäuses 1, 2 angeordneten Betätigungselement 6 dient. Bei dem Betätigungselement 6 handelt es sich um einen Außentürgriff, sofern der Betätigungshebel 3 als Außenbetätigungshebel ausgebildet ist. Alternativ kann es sich aber auch um einen Innentürgriff handeln, wenn der Betätigungshebel 3 einen Innenbetätigungshebel darstellt. Selbstverständlich sind auch Mischformen oder andere Ausgestaltungen denkbar und werden von der Erfindung umfasst.

Darüber hinaus ist ein Anschlusselement 2 zur Lagerung des Verbindungsmittels 4, 5 am Schlossgehäuse 1, 2 vorgesehen. Das Anschlusselement 2 ist im Rahmen der Erfindung als mit einem Grundgehäuse 1 zum Schlossgehäuse 1, 2 vereinigbares Teilgehäuse 2 ausgebildet. Dieses Teilgehäuse 2 deckt in montiertem Zustand sowohl eine Öffnung 7 des Grundgehäuses 1 als auch einen Anbindungsbereich 8 des Betätigungshebels 3 an das Verbindungsmittel 4, 5 ab.

Das heißt, das Anschlusselement 2 fungiert als Teilgehäuse 2 und definiert zusammen mit dem Grundgehäuse 1 insgesamt das Schlossgehäuse 1, 2. Zu diesem Zweck ist das Anschlusselement bzw. Teilgehäuse 2 regelmäßig werkstoffeinheitlich bzw. materialeinheitlich mit dem Grundgehäuse 1 ausgelegt. Das heißt, das Grundgehäuse 1 und auch das Anschlusselement bzw. Teilgehäuse 2 werden jeweils als Kunststoffspritzgussteil aus einem gleichen oder vergleichbaren Kunststoff hergestellt. Das ist selbstverständlich nur als bevorzugte Variante und nicht einschränkend zu verstehen.

Jedenfalls kommt dem Anschlusselement bzw. Teilgehäuse 2 eine zweifache Funktion zu. Zunächst einmal ist das Verbindungsmittel 4, 5 an dem Anschlusselement bzw. Teilgehäuse 2 gelagert. Darüber hinaus fungiert das Anschlusselement bzw. Teilgehäuse 2 als Bestandteil des Schlossgehäuses 1, 2 und definiert zusammen mit dem Grundgehäuse 1 das fragliche Schlossgehäuse 1, 2. Dabei ist das Anschlusselement bzw. Teilgehäuse 2 insgesamt lösbar mit dem Grundgehäuse 1 verbunden.

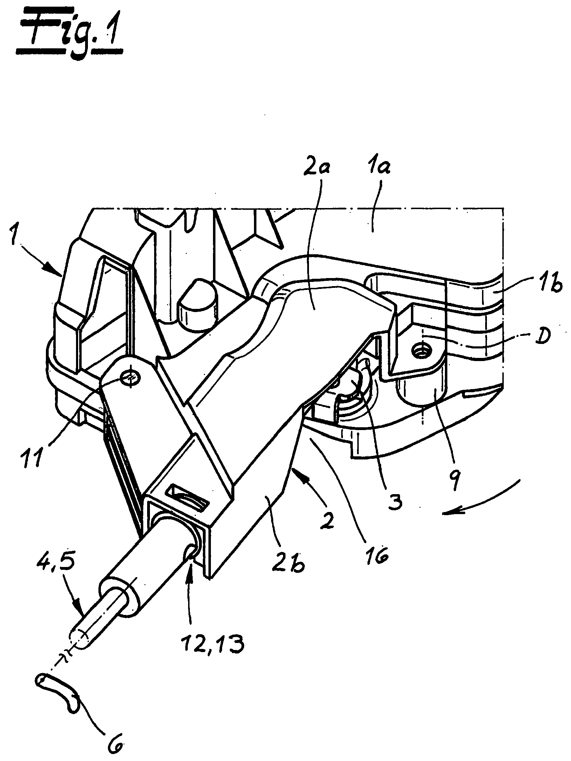

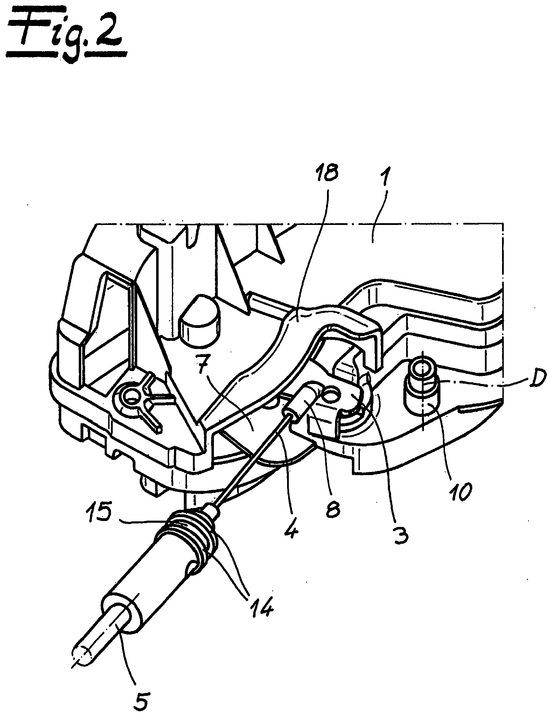

Zu diesem Zweck erkennt man bei einer vergleichenden Betrachtung der Fig. 1 und 2 zunächst einmal einen in eine Steckbuchse 9 eingreifenden Steckzapfen 10. Die Steckbuchse 9 ist am Anschlusselement bzw. Teilgehäuse 2 vorgesehen. Der Steckzapfen 10 findet sich demgegenüber am Grundgehäuse 1. Selbstverständlich kann auch umgekehrt vorgegangen werden. Steckzapfen 10 und Steckbuchse 9 definieren in zusammengestecktem Zustand eine in der Fig. 2 angedeutete Drehachse D. Sobald die Steckbuchse 9 am Anschlusselement bzw. Teilgehäuse 2 auf den Steckzapfen 10 aufgesteckt und die Drehachse D definiert ist, lässt sich das Anschlusselement bzw. Teilgehäuse 2 in Richtung auf das Grundgehäuse 1 an dieses anschwenken, und zwar im Ausführungsbeispiel im Uhrzeigersinn, wie ein Pfeil in der Fig. 1 andeutet. Sobald das Anschlusselement 2 seinen montierten Zustand erreicht hat, kann eine zusätzliche Fixierung mit Hilfe eines Sicherungsstiftes 11 erfolgen, der in montiertem Zustand sich überdeckende Bohrungen in einerseits dem Anschlusselement 2 und andererseits dem Grundgehäuse 1 bzw. erneut einen nicht näher spezifizierten Steckzapfen und/oder eine Steckbuchse durchgreift.

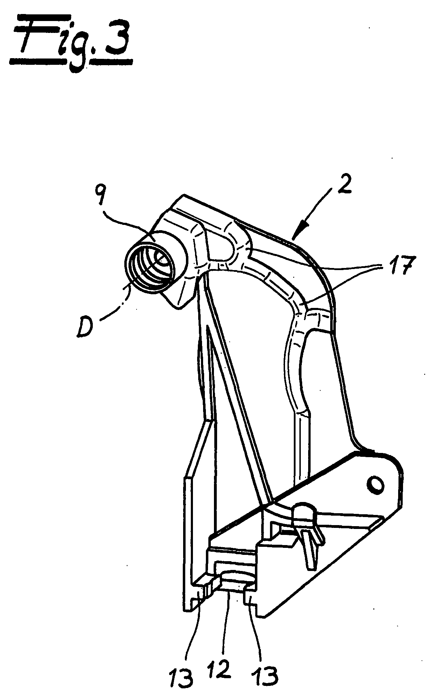

Ein Vergleich der Fig. 1 und 3 macht deutlich, dass das Anschlusselement bzw. Teilgehäuse 2 mit einer Lageraufnahme 12, 13 ausgerüstet ist. Die Lageraufnahme 12, 13 ist als Schlitzaufnahme 12, 13 ausgebildet und verfügt über zwei Stege 13, die beidseitig zwischen sich einen Schlitz 12 beschreiben.

Mit der Lageraufnahme 12, 13 kann ein Befestigungsring 14, 15 am Verbindungsmittel 4, 5 lösbar gekoppelt werden. Tatsächlich setzt sich der Befestigungsring 14, 15 aus zwei Befestigungsflanschen 14 zusammen, die zwischen sich eine Befestigungsnut 15 einschließen. Sobald der Befestigungsring 14, 15 in die Lageraufnahme 12, 13 eingesteckt wird, tauchen der Schlitz 12 und die beidseitigen Stege 13 in die Befestigungsnut 15 ein. Die Befestigungsflansche 14 nehmen zusätzlich die Stege 13 zwischen sich auf. Auf diese Weise ist die Lageraufnahme 12, 13 insgesamt als Widerlager 12, 13 für den Befestigungsring 14, 15 und folglich das Verbindungsmittel 4, 5 im Ganzen ausgelegt.

Das Anschlusselement 2 ist im Querschnitt L-förmig ausgebildet. Tatsächlich beobachtet man einen längeren L-Schenkel 2a und einen kürzeren L-Schenkel 2b. Bei dem längeren L-Schenkel 2a handelt es sich um eine Fortsetzungsoberfläche 2a, die mit einer Grundgehäuseoberfläche 1a insgesamt eine Oberfläche 1a, 2a des Schlossgehäuses 1, 2 definiert. Der kurze L-Schenkel 2b stellt dagegen eine Seitenfläche 2b dar und wirkt mit einer zugehörigen Seitenfläche 1b des Grundgehäuses 1 zusammen. Man erkennt, dass die Seitenfläche 2b des Anschlusselementes bzw. Teilgehäuses 2 insgesamt eine Ausnehmung bzw. Öffnung 16 aufweist, durch welche hindurch unverändert der Anbindungsbereich 8 - zumindest von der Seite her - zugänglich ist.

Die Fortsetzungsoberfläche 2a des Anschlusselementes 2 ist mit einem bzw. mehreren Formschlusselementen 17 ausgerüstet, die man am besten in der Rückansicht nach Fig. 3 erkennt. Diese Formschlusselemente 17 wirken mit Gegenformschlusselemente 18 an der Grundgehäuseoberfläche 1a zusammen. Sobald das Anschlusselement 2 um die Drehachse D an das Grundgehäuse 1 angeschwenkt wird, und zwar in der in Fig. 1 angedeuteten Uhrzeigersinnrichtung im Ausführungsbeispiel, kommen die Formschlusselemente 17 und Gegenformschlusselemente 18 in montiertem Zustand des Anschlusselementes 2 wenigstens teilweise in Eingriff. Dadurch erfährt das Anschlusselement bzw. Teilgehäuse 2 eine Zentrierung und Ausrichtung gegenüber dem Grundgehäuse 1. Dieser montierte Zustand wird dann noch mit Hilfe des Sicherungsstiftes 11 festgelegt bzw. fixiert, was aufgrund der ineinandergreifenden Formschlusselemente 17 und Gegenformschlusselemente 18 nicht unbedingt zwingend ist.

Das Verbindungsmittel 4, 5 ist im Ausführungsbeispiel als Bowdenzug 4, 5 ausgebildet. Der Bowdenzug 4, 5 verfügt über eine Hülle 5 und eine Seele bzw. ein Seil 4. Die Hülle 5 weist den Befestigungsring 14, 15 auf. Da der Befestigungsring 14, 15 lösbar in der Lageraufnahme 12, 13 am Anschlusselement 2 aufgenommen wird, fungiert die Lageraufnahme 12, 13 als Widerlager 12,13 am Anschlusselement 2, und zwar primär für die Hülle 5 und folglich für den Bowdenzug 4, 5 im Ganzen. Zugleich sorgt das Anschlusselement 2 dafür, dass die Öffnung 7 im Grundgehäuse 1 und auch der Anbindungsbereich 8 größtenteils - bis auf die Öffnung 16 - abgedeckt werden. Dadurch wird ein maximaler Schutz vor äußeren Einflüssen zur Verfügung gestellt und zugleich gewährleistet, dass der Anbindungsbereich 8 nach wie vor zugänglich ist. Das ist für einen etwaigen Austausch des Verbindungsmittels 4, 5, im Ausführungsbeispiel des Bowdenzuges 4, 5, gegen beispielsweise eine an dieser Stelle ebenfalls mögliche Stange von besonderer Bedeutung.

## Patentansprüche

1. Kraftfahrzeugtürschloss, mit wenigstens einem in einem Schlossgehäuse (1, 2) angeordneten Betätigungshebel (3), ferner mit einem Verbindungsmittel (4, 5) zur Kopplung des Betätigungshebels (3) mit einem außerhalb des Schlossgehäuses (1, 2) angeordneten Betätigungselement (6), und mit einem Anschlusselement (2) zur Lagerung des Verbindungsmittels (4, 5) am Schlossgehäuse (1, 2), wobei
das Anschlusselement (2) als mit einem Grundgehäuse (1) zum Schlossgehäuse (1, 2) vereinigbares Teilgehäuse (2) ausgebildet ist, welches in montiertem Zustand sowohl eine Öffnung (7) des Grundgehäuses (1) als auch einen Anbindungsbereich (8) des Betätigungshebels (3) an das Verbindungsmittel (4, 5) wenigstens größtenteils abdeckt,
wobei das Anschlusselement (2) lösbar mit dem Grundgehäuse (1) verbunden ist, **dadurch gekennzeichnet, daß**
- hierzu wenigstens ein in eine Steckbuchse (9) eingreifender Steckzapfen (10) vorgesehen ist, wobei
- die Steckbuchse (9) und der hierin eingreifende Steckzapfen (10) zusammengenommen eine Drehachse (D) für das an das Grundgehäuse (1) anschwenkbare Anschlusselement (2) definieren.

2. Kraftfahrzeugtürschloss nach Anspruch 1, **dadurch gekennzeichnet, dass** das Anschlusselement (2) mit einer Lageraufnahme (12, 13) für einen Befestigungsring (14, 15) des Verbindungsmittels (4, 5) ausgerüstet ist.

3. Kraftfahrzeugtürschloss nach Anspruch 2, **dadurch gekennzeichnet, dass** die Lageraufnahme (12, 13) als Schlitzaufnahme (12,13) ausgebildet ist.

4. Kraftfahrzeugtürschloss nach einem der Ansprüche bis 3, **dadurch gekennzeichnet, dass** der Befestigungsring (14, 15) mit zwei eine Befestigungsnut (15) zwischen sich einschließenden Befestigungsflanschen (14) ausgerüstet ist.

5. Kraftfahrzeugtürschloss nach einem der Ansprüche 2 bis 4, **dadurch gekennzeichnet, dass** die Lageraufnahme (12, 13) als Widerlager (12, 13) für den Befestigungsring (14, 15) und folglich das Verbindungsmittel (4, 5) im Ganzen ausgelegt ist.

6. Kraftfahrzeugtürschloss nach einem der Ansprüche 1 bis 5, **dadurch gekennzeichnet, dass** das Anschlusselement (2) im Querschnitt L-förmig ausgebildet ist.

7. Kraftfahrzeugtürschloss nach Anspruch 6, **dadurch gekennzeichnet, dass** der eine L-Schenkel (2a) als Fortsetzungsoberfläche (2a) einer Grundgehäuseoberfläche (1a) ausgebildet ist.

8. Kraftfahrzeugtürschloss nach Anspruch 7, **dadurch gekennzeichnet, dass** die Fortsetzungsoberfläche (2a) mit einem oder mehreren Formschlusselementen (17) ausgerüstet ist, die zu Gegenformschlusselementen (18) an der Grundgehäuseoberfläche (1a) korrespondieren.

## Claims

1. A motor vehicle door lock, having: at least one operating lever (3), which is arranged in a lock housing (1, 2), a connecting means (4, 5) for coupling the operating lever (3) to an operating element (6) arranged outside the lock housing (1, 2), and an attachment element (2) for mounting the connecting means (4, 5) on the lock housing (1, 2), wherein the attachment element (2) is in the form of a part-housing (2), which can be combined with a main housing (1) to form the lock housing (1, 2) and at least largely covers an opening (7) in the main housing (1) and a joining region (8) of the operating lever (3) to the connecting means (4, 5) when in the mounted state,
wherein the attachment element (2) is connected detachably to the main housing (1),
**characterised in that**
- to this end at least one plug pin (10) is provided, which engages in a plug socket (9), wherein
- the plug socket (9) and the plug pin (10) that engages therein together define a rotation axis (D) for the attachment element (2) that can be pivoted onto the main housing (1).

2. The motor vehicle door lock according to Claim 1, **characterised in that** the attachment element (2) is equipped with a bearing holder (12, 13) for a fastening ring (14, 15) of the connecting means (4, 5).

3. The motor vehicle door lock according to Claim 2, **characterised in that** the bearing holder (12, 13) is in the form of a slotted holder (12, 13).

4. The motor vehicle door lock according to any one of Claims 2 to 3, **characterised in that** the fastening ring (14, 15) is equipped with two fastening flanges (14), which enclose a fastening groove (15) between them.

5. The motor vehicle door lock according to any one of Claims 2 to 4, **characterised in that** the bearing holder (12, 13) is designed as a counter bearing (12, 13) for the fastening ring (14, 15) and therefore for the connecting means (4, 5) as a whole.

6. The motor vehicle door lock according to any one of Claims 1 to 5, **characterised in that** the attachment element (2) has an L-shaped cross section.

7. The motor vehicle door lock according to Claim 6, **characterised in that** one L limb (2a) is formed as a continuation surface (2a) of a main housing surface (1a).

8. The motor vehicle door lock according to Claim 7, **characterised in that** the continuation surface (2a) is equipped with one or more form-fitting elements (17), which correspond to counter form-fitting elements (18) on the main housing surface (1 a).

## Revendications

1. Serrure de porte de véhicule automobile, avec au moins un levier de commande (3) disposé dans un boîtier de serrure (1, 2), en plus avec un moyen de liaison (4, 5) pour accouplement du levier de commande (3) avec un élément de commande (6) disposé en dehors du boîtier de serrure (1, 2) et avec un élément de raccordement (2) pour loger le moyen de liaison (4, 5) sur le boîtier de serrure (1, 2), pour laquelle l'élément de raccordement (2) est constitué comme un boîtier partiel (2) pouvant être réuni à un boîtier de base (1) au boîtier de serrure (1, 2), qui, à l'état monté, couvre au moins en grande partie aussi bien une ouverture (7) du boîtier de base (1) qu'une zone de liaison (8) du levier de commande (3) sur le moyen de liaison (4, 5),
pour laquelle l'élément de raccordement (2) est relié de manière amovible au boîtier de base (1),
**caractérisée en ce que**
- à cet effet au moins un pivot d'emboîtement (10) venant en prise dans une douille enfichable (9) est prévu
- la douille enfichable (9) et le pivot d'emboîtement (10) venant en prise dedans définissent pris ensemble un axe de rotation (D) pour l'élément de raccordement (2) pouvant pivoter sur le boîtier de base (1).

2. Serrure de porte de véhicule automobile selon la revendication 1, **caractérisée en ce que** l'élément de raccordement (2) est doté d'un logement d'appui (12, 13) pour un anneau de fixation (14, 15) du moyen de liaison (4, 5).

3. Serrure de porte de véhicule automobile selon la revendication 2, **caractérisée en ce que** le logement d'appui (12, 13) est constitué comme un logement à fente (12, 13).

4. Serrure de porte de véhicule automobile selon l'une quelconque des revendications 2 à 3, **caractérisée en ce que** l'anneau de fixation (14, 15) est doté de deux brides de fixation (14) comprenant entre elles une rainure de fixation (15).

5. Serrure de porte de véhicule automobile selon l'une quelconque des revendications 2 à 4, **caractérisée en ce que** le logement d'appui (12, 13) est conçu dans l'ensemble comme appui de butée (12, 13) pour l'anneau de fixation (14, 15) et par suite le moyen de liaison (4, 5).

6. Serrure de porte de véhicule automobile selon l'une quelconque des revendications 1 à 5, **caractérisée en ce que** l'élément de raccordement (2) est constitué en forme de L dans la section.

7. Serrure de porte de véhicule automobile selon la revendication 6, **caractérisée en ce que** la branche en L (2a) est constituée comme surface de prolongation (2a) d'une surface du boîtier de base (1a).

8. Serrure de porte de véhicule automobile selon la revendication 7, **caractérisée en ce que** la surface de prolongation (2a) est dotée d'un ou plusieurs éléments à complémentarité de forme (17), qui correspondent aux contre-éléments à complémentarité de forme (18) sur la surface du boîtier de base (1a).
